# EUROPÄISCHE PATENTSCHRIFT

(11) **EP 1 301 756 B1**
(45) Veröffentlichungstag und Bekanntmachung des Hinweises auf die Patenterteilung: **07.10.2009**
(21) Anmeldenummer: 01953871.9
(22) Anmeldetag: 05.07.2001
(51) Int. Cl.: G01C 21/32, G08G 1/0968

(54) **VERFAHREN UND ANORDNUNG ZUR CODIERUNG, ZUR DECODIERUNG UND/ODER ZUR ÜBERTRAGUNG VON ORTSINFORMATIONEN**
METHOD AND SYSTEM FOR ENCODING, DECODING AND/OR FOR TRANSMITTING LOCATION INFORMATION
PROCEDE ET DISPOSITIF DE CODAGE, DE DECODAGE ET/OU DE TRANSMISSION D'INFORMATIONS LOCALES

(30) Priorität: 07.07.2000 DE 10033193
(43) Veröffentlichungstag der Anmeldung: 16.04.2003
(73) Patentinhaber: ROBERT BOSCH GMBH, 70442 Stuttgart (DE)
(72) Erfinder: HESSLING, Matthias, 31141 Hildesheim (DE); HAHLWEG, Cornelius, 22147 Hamburg (DE)
(86) Internationale Anmeldenummer: PCT/DE2001/002496
(87) Internationale Veröffentlichungsnummer: WO 2002/004894

(56) Entgegenhaltungen:
- DE-A- 3 544 705
- FR-A- 2 760 282
- US-A- 5 465 088

## Beschreibung

### Stand der Technik

Die Erfindung geht aus von einem Verfahren zur Codierung, zur Decodierung und/oder zur Übertragung von Ortsinformationen nach der Gattung des Hauptanspruchs. Es sind bereits digitale Karten bekannt, deren Inhalte insbesondere gemäß proprietärer oder standardisierter Formate codiert sind. Bekannt sind weiterhin Verfahren, bei denen Teilnetze in Form von Korridoren um eine Hauptroute, beispielsweise zur Fahrzeugnavigation verwendet werden. Auch existieren Ideen zur Übertragung ganzer Karten, insbesondere über eine Luftschnittstelle.

Aus der Druckschrift FR 2 760 282 A1 ist ein Verfahren und ein System zur dynamischen Routenführung für ein Fahrzeug bekannt. Ferner ist aus der Druckschrift DE 35 44 705 A1 ein passiver programmierbarer Responder für ein fahrerloses Führungssystem bekannt.

### Vorteile der Erfindung

Das erfindungsgemäße Verfahren und die Anordnung mit den Merkmalen der nebengeordneten Ansprüche haben demgegenüber den Vorteil, dass eine sinnvolle Beschreibung von Netzen bzw. Netzteilen von digitalen Karten, wie sie für Navigations- und Referenzierungszwecke benötigt werden, möglich ist. Durch die vorgeschlagene Datenstruktur können in gleicher Weise sowohl geometrische Beschreibungen als auch Attribute geografischer Objekte für Objekte beliebiger Komplexität-d. h. bis hin zu Teilnetzen-effizient und eindeutig interpretierbar übertragen werden. Es ist erfindungsgemäß möglich, jeden einzelnen Punkt der geometrischen Beschreibung markieren zu können, d. h. eine Referenz auf eine Beschreibung oder dergleichen anzugeben.

Weiterhin ist möglich, dies für ganze Punktfolgen bzw. entsprechende Streckenzüge, zu tun. Weiterhin können Verzweigungen übertragen werden. Vorteilhaft ist insbesondere, dass die Ortsinformationen im erfindungsgemäßen Datenformat auf einer einzigen Rekursionsebene in der Reihenfolge ihrer physischen Anordnung einander folgen. Weiterhin ist von Vorteil, dass bei der Codierung der Ortsinformationen für eine vorgegebene Mehrzahl von Punkten die Definition des Hauptpfades und des wenigstens einen Pfades (= Partitionierung) in Abhängigkeit eines Partitionierungsparameters vorgegeben wird. Dadurch ist eine Partitionierung gemäß rationaler Kriterien möglich.

Weiterhin ist von Vorteil, dass die Ortsinformationen eine Mehrzahl von Pfaden umfassen, dass ein zweiter Pfad in Bezug auf einen ersten Pfad ein Unterpfad ist, wobei wenigstens ein Pfadpunkt des zweiten Pfades als ein Verzweigungspunkt mit einem Pfadpunkt des ersten Pfades identisch ist.

Hierdurch ist es möglich, eine Mehrzahl von Punkten bzw. ein Netz von miteinander verbundenen Punkten zu partitionieren, d.h. vollständig in Pfade zu zerlegen, wodurch sich eine Ober-bzw. Unterordnung von bestimmten Pfaden gegenüber anderen Pfaden ergibt und wobei das Verfahren zur Partitionierung rekursiv für die so partitionierten Unterpfade fortgeführt wird.

Weiterhin ist von Vorteil, dass der mindestens eine Pfadpunkt des zweiten Pfades, der in Bezug auf den ersten Pfad ein Unterpfad ist, der Anfangspunkt des zweiten Pfades ist. Dadurch wird gewährleistet, dass ein Unterpfad immer an einem Kreuzungspunkt bzw. einem Knotenpunkt beginnt und dass es somit keine Zweifel hinsichtlich der Digitalisierungsrichtung auf einem Pfad gibt.

Weiterhin ist von Vorteil, dass der Partitionierungsparameter der Streckenwiderstand ist, der einer Streckenverbindung zwischen zwei Punkten aus der Mehrzahl von Punkten zugeordnet ist. Dadurch ergibt sich der Vorteil, dass eine Partitionierung vorgenommen wird, die sich dadurch auszeichnet, dass der Hauptpfad die schnellste Route darstellt. Im allgemeinen werden dabei übergeordnete Straßen bzw. Strecken der digitalen Karte solchen Straßen entsprechen, die einen geringen Streckenwiderstand haben.

Weiterhin ist von Vorteil, dass der Partitionierungsparameter die Straßenbezeichnung und/oder Straßenkategorie einer Streckenverbindung zwischen zwei Punkten aus der Mehrzahl von Punkten zugeordnet ist. Dadurch ergibt sich eine Entsprechung von Bezeichnungen der digitalen Karte und der Bezeichnung von Straßen in der Realität.

Weiterhin ist von Vorteil, dass offene Pfade vorgesehen sind. Dadurch können beliebige Ziele, die beispielsweise lediglich einen Zufahrtsweg haben, navigabel in die digitale Karte integriert werden.

Weiterhin ist von Vorteil, dass die Pfade geschlossene Maschen bilden. Dadurch sind die gemäß des erfindungsgemäßen Datenformats organisierten Ortsinformationen auch für solche Situationen brauchbar, in denen geschlossene Maschen notwendige Voraussetzung sind, beispielsweise bei bestimmten proprietären Navigationssystemen.

Weiterhin ist von Vorteil, dass zusätzlich zu der Mehrzahl von Punkten neue Punkte und/oder neue Streckenverbindungen in die Ortsinformationen integriert werden, wobei die Beschreibung der Mehrzahl von Punkten erhalten bleibt.

Dadurch können zusätzliche Pfade, Punkte und Kreuzreferenzen, d.h. Rückbeziehungen auf bereits beschriebene Punkte bzw. Strecken, in ein bestehendes Netz bzw. in eine bestehende Menge von Ortsinformationen ohne Änderung der vorher numerierten Teile des Netzes eingefügt werden, womit also z.B. eine erweiterbare Karte entsteht.

Weiterhin ist von Vorteil, dass das Datenformat die Darstellung der Ortsinformationen gemäß einer Beschreibungssprache (Markup-Language), insbesonder XML-basiert (Extended Markup-Language), vorsieht. Dadurch werden Objekte beliebiger Komplexität effizient und eindeutig interpretierbar.

Weiterhin ist von Vorteil, daß das Datenformat vorsieht, einem Punkt aus der Mehrzahl von Punkten oder mehreren Punkten aus der Mehrzahl von Punkten ein Attribut zuzuordnen. Dadurch kann eine Attribuierung sowohl pfad-, kanten-, als auch punktorientiert erfolgen. Dadurch ist es möglich, beliebige Attribute, d.h. beschreibende Informationen den Elementen der Ortsinformationen zuzuordnen.

### Zeichnung

Ein Ausführungsbeispiel der Erfindung ist in der Zeichnung dargestellt und in der nachfolgenden Beschreibung näher erläutert. Es zeigen
Figur 1 ein System zur Übertragung von Ortsinformationen,
Figur 2 eine erste Darstellung einer digitalen Karte,
Figur 3 eine zweite Darstellung der digitalen Karte und
Figur 4 eine Darstellung einer ergänzten digitalen Karte.

### Beschreibung des Ausführungsbeispiels

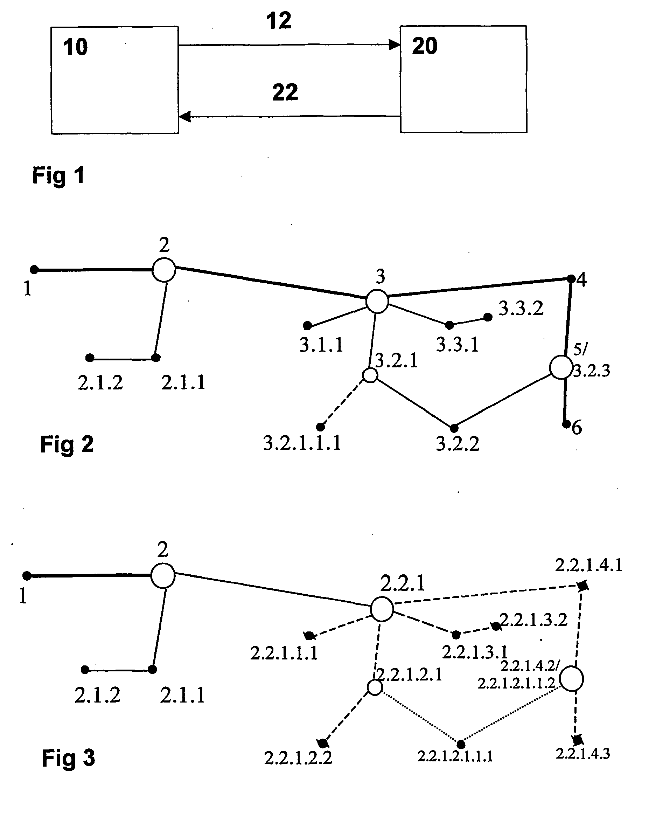

In Figur 1 ist ein System zur Übertragung von Ortsinformationen gemäß eines erfindungsgemäßen Datenformats dargestellt. Eine erste Systemeinheit 10 ist dabei über zwei Übertragungskanäle mit einer zweiten Systemeinheit 20 verbunden. Über einen ersten Übertragungskanal 12 können Informationen von der ersten Systemeinheit 10 zur zweiten Systemeinheit 20 übertragen werden und über einen zweiten Übertragungskanal 22 können Informationen von der zweiten Systemeinheit 20 zur ersten Systemeinheit 10 übertragen werden. Die Übertragungskanäle 12, 22 sind dabei insbesondere als Funkschnittstellen, lokale Netzwerke (LAN=Local Area Network), sonstige drahtgebundene Verbindungen, Infrarotverbindungen, Mobilkommunikationsverbindungen und dergleichen ausgebildet. Bei der Ausbildung der ersten Systemeinheit 10 beispielsweise als Anfrageeinrichtung stellt diese über den ersten Übertragungskanal 12 eine Anfrage an die beispielsweise als Diensteanbieter ausgestaltete zweite Systemeinheit 20, woraufhin die zweite Systemeinheit 20 das Resultat der Anfrage über den zweiten Übertragungskanal 22 zur ersten Systemeinheit 10 zurücksendet. Die erste Systemeinheit 10 ist hierbei beispielsweise ein Kraftfahrzeug, das Ortsinformationen von einem Diensteanbieter (zweite Systemeinheit 20) abfragt. Die erfindungsgemäß über die Übertragungskanäle 12, 22 übertragenen Ortsinformationen sind gemäß eines Datenformats codiert. Bei der Formulierung der Anfrage bzw. der Antwort durch die erste bzw. zweite Systemeinheit 10, 20 wird daher zunächst die zu sendenden Ortsinformationen entsprechend des erfindungsgemäßen Datenformats codiert. Anschließend wird die Ortsinformation übertragen und beim Empfänger der Ortsinformation wird diese decodiert. Hierzu haben die Systemeinheiten 10, 20 je nach Verwendungszweck entweder lediglich eine Codierungsvorrichtung bzw. eine Decodierungsvorrichtung oder aber sowohl eine Decodierungsals auch eine Codierungsvorrichtung. Das in Figur 1 dargestellte System ist somit eine Anordnung zur Codierung, zur Decodierung und/oder zur Übertragung von Ortsinformationen.

In Figur 2 ist eine erste Darstellung einer digitalen Karte beispielhaft dargestellt. In Figur 2 ist ein erster Punkt 1 mit einem zweiten Punkt 2 verbunden, der mit einem dritten Punkt 3 verbunden ist, der mit einem vierten Punkt 4 verbunden ist, der mit einem fünften Punkt 5/3.2.3 verbunden ist, der mit einem sechsten Punkt 6 verbunden ist. Der zweite Punkt 2 ist mit einem siebten Punkt 2.1.1 verbunden, der mit einem achten Punkt 2.1.2 verbunden ist. Der dritte Punkt 3 ist mit einem neunten Punkt 3.1.1 verbunden. Der dritte Punkt ist weiterhin mit einem zehnten Punkt 3.2.1 verbunden, der mit einem elften Punkt 3.2.2 verbunden ist, der mit dem fünften Punkt 5/3.2.3 verbunden ist. Der dritte Punkt 3 ist weiterhin mit einem zwölften Punkt 3.3.1 verbunden, der mit einem dreizehnten Punkt 3.3.2 verbunden ist. Der zehnte Punkt 3.2.1 ist weiterhin mit einem vierzehnten Punkt 3.2.1.1.1 verbunden. Die Verbindungen zwischen zwei Punkten der Ortsinformationen entsprechen Straßen auf der digitalen Karte. Es gibt nun mehrere Möglichkeiten, eine solche Mehrzahl von Punkten und deren Verbindungen, die das Grundgerüst einer digitalen Karte darstellen, zu codieren. Erfindungsgemäß wird zur Codierung der Mehrzahl von Punkten und ihrer Verbindungen ein Teil der Punkte und ihre Verbindungen zu Pfaden bzw. einem Hauptpfad zusammengefasst. Es ist erfindungsgemäß vorgesehen, dass eine Straße bzw. eine Streckenverbindung zwischen zwei Punkten dadurch ausgedrückt wird, dass die zwei Punkte in einem Pfad bzw. im Hauptpfad im Datenformat der Ortsinformationen hintereinander angeordnet sind. Entsprechend wird in der ersten Darstellung der digitalen Karte eine Untermenge der Mehrzahl von Punkten zu einem Hauptpfad zusammengefasst, der den ersten bis sechsten Punkt 1, 2, 3, 4, 5/3.2.3, 6 umfasst. Der Hauptpfad in der ersten Darstellung der digitalen Karte umfaßt Punkte, die keine Kreuzungspunkte sind (erster, vierter und sechster Punkt 1, 4, 6) und Punkte, die Kreuzungspunkte darstellen (zweiter, dritter und fünfter Punkt 2, 3, 5/3.2.3). An Kreuzungspunkten bzw. Knotenpunkten ist der Hauptpfad mit einem anderen Pfad verknüpft. Beispielsweise bilden der zweite, der siebte und der achte Punkt 2, 2.1.1, 2.1.2 einen vom Hauptpfad am zweiten Punkt 2 abzweigenden ersten Pfad. Daher wird der erste Pfad auch als Unterpfad bezüglich des Hauptpfades bezeichnet. In analoger Weise zweigen vom dritten Punkt 3 ein zweiter Pfad, ein dritter Pfad und ein vierter Pfad ab. Der zweite Pfad umfasst lediglich den dritten Punkt 3 und den neunten Punkt 3.1.1. Der dritte Pfad umfasst dritten, zehnten, elften und fünften Punkt 3, 3.2.1, 3.2.2, 5/3.2.3. Der vierte Pfad umfasst den dritten Punkt 3, den zwölften Punkt 3.3.1, und den dreizehnten Punkt 3.3.2. Der zweite, dritte und vierte Pfad ist jeweils ein Unterpfad bezüglich des Hauptpfades. Beim zehnten Punkt 3.2.1 zweigt vom dritten Pfad ein fünfter Pfad ab. Der fünfte Pfad umfasst den zehnten Punkt 3.2.1 und den vierzehnten Punkt 3.2.1.1.1. Der fünfte Pfad ist bezüglich des dritten Pfades ein Unterpfad. Der Begriff "Unterpfad" ist somit relativ. Es kommt darauf an, welches Paar von Pfaden betrachtet wird. Der dritte Pfad bildet mit dem Hauptpfad eine geschlossene Masche, weil der Endpunkt des dritten Pfades (fünfter Punkt 5/3.2.3) identisch mit dem fünften Punkt 5, d.h. dem fünften Punkt des Hauptpfades ist.

In Figur 3 ist eine zweite Darstellung der digitalen Karte mit den gleichen Punkten wie in der ersten Darstellung gegeben. Die Punkte sind wiederum in der gleichen Weise wie in der ersten Darstellung miteinander verbunden. Der Unterschied zwischen der Figur 2 und der Figur 3 ist die unterschiedliche Partitionierung der Punkte bzw. der digitalen Karte, d.h. die Zusammenfassung von verschiedenen Untermengen der Punkte zu einem Hauptpfad bzw. zu weiteren Pfaden ist in den verschiedenen Darstellungen unterschiedlich. Daher sind die Bezeichnungen der Punkte in der zweiten Darstellung aufgrund der unterschiedlichen Partitionierung anders. Jedoch handelt es sich in beiden Darstellungen jeweils beim ersten, zweiten, dritten, ..., und vierzehnten Punkt um das gleiche (es wurden auch deren Verbindungen als identisch vorausgesetzt); es wird lediglich die Nummerierung und die Hierarchieebenen geändert. In Figur 3 besteht der Hauptpfad der digitalen Karte beispielsweise lediglich aus dem ersten Punkt 1 und dem zweiten Punkt 2. Der Hauptpfad hat in der zweiten Darstellung der Karte zwei Unterpfade. Diese sind ein sechster Pfad, der in der zweiten Darstellung den zweiten, siebten und achten Punkt (2, 2.1.1, 2.1.2) umfaßt, und ein siebter Pfad, den in der zweiten Darstellung den zweiten und dritten Punkt (2, 2.2.1) umfaßt. Der sechste und siebte Pfad ist gegenüber dem Hauptpfad in der zweiten Darstellung ein Unterpfad. Vom dritten Punkt 2.2.1 geht ein achter. Pfad los, der den dritten Punkt 2.2.1 und den neunten Punkt 2.2.1.1.1 umfasst. Weiterhin gehen vom dritten Punkt 2.2.1 ein neunter Pfad ab, der den dritten Punkt 2.2.1, den zehnten Punkt 2.2.1.2.1 und den vierzehnten Punkt 2.2.1.2.2 umfasst. Weiterhin gehen vom dritten Punkt 2.2.1 ein zehnter Pfad ab, der den dritten Punkt 2.2.1, den zwölften Punkt 2.2.1.3.1 und den dreizehnten Punkt 2.2.1.3.2 umfasst. Weiterhin geht vom dritten Punkt 2.2.1 ein elfter Pfad ab, der den dritten Punkt 2.2.1, den vierten Punkt 2.2.1.4.1, den fünften Punkt 2.2.1.4.2/2.2.1.2.1.1.2 und den sechsten Punkt 2.2.1.4.3 umfasst. Vom zehnten Punkt 2.2.1.2.1 geht ein zwölfter Pfad ab, der den zehnten Punkt 2.2.1.2.1, den elften Punkt 2.2.1.2.1.1.1 und den fünften Punkt 2.2.1.4.2/2.2.1.2.1.1.2 umfasst.

Durch die unterschiedliche Aufteilung der Mehrzahl von Punkten in einen Hauptpfad und mehrere weitere Pfade ergibt sich in Figur 3 eine größere Schachtelungstiefe zur Beschreibung der digitalen Karte als in der ersten Darstellung der digitalen Karte. Beispielsweise gibt es in der zweiten Darstellung vier Pfade (nämlich der achte, neunte, zehnte und elfte Pfad) die jeweils Unterpfade bezüglich eines Unterpfades des Hauptpfades sind; bei der ersten Darstellung gibt es auf dieser Rekursionsebene bzw. Hierarchieebene lediglich einen Pfad (der fünfte Pfad). Eine größere Schachtelungstiefe erfordert einen höheren Codierungsaufwand, was in nutzloser Weise Rechenkapazität bei der Codierung und Decodierung sowie Übertragungsbandbreite bei der Übertragung der Ortsinformationen erfordert. Daher ist eine Darstellung digitaler Karten mit möglichst geringer Schachtelungstiefe wünschenswert. Dies wird erfindungsgemäß dadurch realisiert, dass die Partitionierung der digitalen karte so gewählt wird, dass die Anzahl der Hierarchieebenen (= die Schachtelungstiefe bzw. Rekursionstiefe) gering gehalten und so eine effektive Codierung erreicht wird. Vorteilhaft orientiert sich daher die Partitionierung am Verwendungszweck des Datenmaterials bzw. an seinen Eigenschaften, obwohl die Aufteilung des zu beschreibenden Netzes bzw. der digitalen Karte, wie in der ersten und zweiten Darstellung der digitalen Karte gezeigt, willkürlich erfolgen kann.

Wenn es beispielsweise um die Codierung eines navigablen Korridors um eine Hauptroute herum geht, der von einem Serviceprovider an ein infrastrukturgestütztes Fahrzeugnavigationssystem übermittelt wird, und das Kriterium für die Erstellung des Navigationskorridors war beispielsweise ein geringer Streckenwiderstand auf der Zielführungsroute, dann ist es sinnvoll, als Partitionierungsparameter zur Partitionierung der den Navigationskorridor bildenden Punkte, insbesondere zur Definition des Hauptpfades, auch den Streckenwiderstand einzusetzen. Hierdurch entspricht beispielsweise der Hauptpfad im wesentlichen der zu navigierenden Route und erreicht somit eine große Länge, wodurch zusätzliche und in diesem Fall unnötige Hierarchie- bzw. Rekursionsebenen durch eine andere Partitionierung entlang des Hauptpfades vermieden werden.

Werden beispielsweise zur Erzeugung des Navigationskorridors bekannte Routingalgorithmen, wie beispielsweise "Fort Moore" angewandt, so ergibt sich ein Teilnetz in Form eines logischen Baumes. Die sich ergebenden (Teil-)Pfade lassen sich nach einem Kriterium, beispielsweise nach dem Streckenwiderstand ordnen und damit priorisieren. Wird die gleiche Priorisierung für die Partitionierung übernommen, so erhält man eine Beschreibung, die entlang der günstigsten Route interpretierbar ist, was im Navigationsprozeß dem Verweilen des Fahrzeugs auf der Hauptroute entspricht. Erst beim Verlassen der Hauptroute kommen die Nebenpfade zum Tragen. Nebenpfade sind solche Pfade, die bezüglich des Hauptpfades Unterpfade sind. Erfindungsgemäß werden die Ortsinformationen sequentiell entlang des Hauptpfades beschrieben, so dass im Beispiel diejenigen Teile des Navigationskorridors, die aktuell nicht für eine Ortung benötigt werden (da sie an weit vom betrachteten Punkt entfernt liegenden Punkten des Hauptpfades liegen), vernachlässigt werden können. Dadurch wird Rechenkapazität und Übertragungsbandbreite eingespart.

Es ist erfindungsgemäß vorgesehen, als Partitionierungsparameter die Straßenbezeichnung und/oder Straßenkategorie einer Streckenverbindung zwischen zwei Punkten zu benutzen. Wenn der Navigationskorridor beispielsweise über lange Strecken entlang einer Autobahn verläuft, so kann es sinnvoll sein, als Hauptroute die Autobahn zu wählen. Hierzu wird dann als Partitionierungsparameter die Straßenbezeichnung der Autobahn vorgesehen. Als weitere Werte im Spektrum eines solchen Partitionierungsparameters könnte dann beispielsweise die Straßen unterhalb der Autobahnkategorie genommen werden.

Als weitere Möglichkeit eines Partitionierungsparameters ist weiterhin die Ausbaustufe, die touristische Attraktivität oder dergleichen vorgesehen.

Es ist erfindungsgemäß möglich, jeden einzelnen Punkt der geometrischen Beschreibung zu markieren, d.h. eine Referenz auf eine Beschreibung oder dergleichen anzugeben. Weiterhin ist es möglich, eine solche Beschreibung für ganze Punktfolgen, d.h. Streckenzüge bzw. Pfade anzugeben und Verzweigungen darzustellen, um auch Netze, d.h. vollständige digitale (Teil-)Karten, codieren, decodieren und übertragen zu können. Vorteilhaft ist es, dass umgekehrt auch jedem Beschreibungsattribut problemlos ein Punkt bzw. eine Punktfolge zugeordnet werden kann. Dies kann beispielsweise mit einer Kreuzreferenztabelle geschehen. In diesem Fall sieht das Datenformat beispielsweise vor, zusätzlich zu den Ortsinformationen und den Beschreibungsattributen Zuordnungsinformationen zu umfassen, die eine Zuordnung zwischen den Ortsinformationen und den Beschreibungsattributen oder auch Beschreibungsinformationen erlauben. Hierdurch können die Beschreibungsinformationen getrennt von den Ortsinformationen codiert, decodiert und übertragen werden. Die Zuordnungsinformationen sind in diesem Fall in Form von Zuordnungseinträgen gegliedert und umfassen jeweils eine Referenz sowohl auf einen Punkt als auch auf eine Beschreibungsinformation, beispielsweise in Form eines Beschreibungsattributs, das einem Punkt oder einer Punkteverbindung zugeordnet werden soll. Hierbei ist es erfindungsgemäß insbesondere sowohl zugelassen, dass ein Zuordnungseintrag eine Verbindung zwischen genau einem Punkt und genau einem Beschreibungsattribut herstellt, als auch zugelassen, dass eine Zuordnung zwischen einer Anzahl von mehreren Punkten und genau einem Beschreibungsattribut oder aber zwischen genau einem Punkt und einer Anzahl von mehereren Beschreibungsattributen zugelassen wird. Hierdurch erhöht sich die Codierungseffizienz. In vorteilhafter Weise werden die Zuordungseinträge erfindungsgemäß in Tabellenform angeordnet.

Als erfindungsgemäße Ortsinformationen kommen insbesondere Netze in Frage, für die ein Hauptpfad bestimmt werden kann, wobei Nebenstränge, d.h. Pfade, die bezüglich des Hauptpfades oder eines anderen Pfades Unterpfade darstellen, nicht zwangsläufig geschlossene Maschen bilden müssen. Dieser Fall tritt insbesondere bei Telematikanwendungen, wie POI-Referenzierung (Point of Interrest), Teilnetz- und Routen(korridor)übertragung, Reiseführern, auf.

Die erfindungsgemäße Partitionierung von mit Beschreibungsattributen versehenen Kartennetzen, insbesondere Straßennetzen nach geometrischen Gesichtspunkten erlaubt es erfindungsgemäß, dass ein konsistenter Hauptpfad im zu beschreibenden Netz bestimmt wird, dass die Codierung in definierter Richtung entlang des Hauptpfades erfolgt, dass die übrigen Pfade als Unterpfade in Bezug auf den Hauptpfad betrachtet werden können (Nebenzweige), dass jeder Pfad (ob Hauptpfad oder Unterpfad bezüglich des Hauptpfades oder eines anderen Pfades) Verzweigungspunkte enthalten kann, von denen wiederum Pfade abgehen, die in Bezug auf den den Verzweigungspunkt enthaltenden Pfad Unterpfade sind. Weiterhin wird beim erfindungsgemäßen Datenformat jedem Punkt eine eindeutige Nummer zugeordnet, wobei ein Punkt, der einen Knoten darstellt, der folglich ein Verzweigungspunkt ist, in der Beschreibung der digitalen Karte sowohl einen ersten Eintrag, der darauf hinweist, dass der Knotenpunkt ein Teil des gerade zu beschreibenden Pfades ist, als auch einen zweiten Eintrag erzeugt, der darauf hinweist, dass der Knotenpunkt auch Teil eines Unterpfades in Bezug auf den beschriebenen Pfad ist. Der zweite Eintrag wird dabei implizit dadurch bewirkt, dass der erste Punkt des Unterpfades nach dem Knotenpunkt an erster Stelle einer Unterdefinition (nested definition) nach dem Beginn der Definition des Knotenpunktes steht. Da jegliche Pfade von erfindungsgemäß codierten digitalen Karten eine definiterte Digitalisierungsrichtung aufweisen, wird die Digitalisierungsrichtung dazu benutzt, die Codierungseffizienz dadurch zu erhöhen, dass abzweigende Pfade nur vom Knotenpunkt aus beschrieben werden, die den Anfangspunkt des Unterpfades darstellen. Bei Unterpfaden, die durch ihren Endpunkt oder durch einen beliebigen anderen ihrer Punkte mit anderen Pfaden verbunden sind, wird lediglich eine Referenzinformation bei den Definitionen der verbundenen Pfade vorgesehen. Dies ist beispielsweise bei geschlossenen Maschen der Fall. Zur Beschreibung eines beliebigen Pfades, d.h. sowohl des Hauptpfades als auch eines anderen Pfades, werden die Punkte, die in diesem Pfad enthalten sind, entsprechend ihrer geometrischen Anordnung, d.h. in Interpretationsrichtung bzw. in Digitalisierungsrichtung, aufeinanderfolgend, insbesondere gemäß einer Markup-Language beschrieben, wobei der Beginn jedes neuen Punktes mittels eines Beschreibungszeichens (Tag) gekennzeichnet wird.

Dabei können neben den geografischen Koordinaten jedem Punkt beliebige Attribute zugeordnet werden. Dies ist ebenso für Punktfolgen möglich, womit eine Attribuierung sowohl pfad-, kanten- als auch punktorientiert erfolgen kann. Die Attribute können dabei insbesondere sowohl Namen, beispielsweise Straßennamen, Streckeneingenschaften, beispielsweise Geschwindigkeitsbeschränkungen, Staugefahr oder dergleichen, oder navigationsrelevante Attibute darstellen. Weiterhin ist die Wahl der Partitionierung willkürlich. Ein wesentlicher Vorteil besteht in der Tatsache, dass z.B. bei der Übertragung sogenannter Routenkorridore eine Priorisierung der Pfade vorgenommen werden kann sowie direkt zusammenhängende Teile direkt ausgelesen werden können. Ein weiterer Vorteil ist die mit der erfindungsgemäßen Partitionierung erreichte Einschränkung der Rekursionstiefe, was eine wesentliche Voraussetzung für eine effektive Codierung ist. Das vorgeschlagene Verfahren eignet sich insbesondere auch für geometrisch orientierte Location-Referencing-Verfahren.

Bezüglich der Koordinatendarstellung sind verschiedenste Ausprägungen denkbar. Dies bezieht sich neben der Einheit (in Grad, Minuten, Sekunden oder dezimal, integer oder doppelte Präzision) und dem Bezugssystem (WGS84 oder ähnliches) auch auf die Frage nach absoluter oder relativer Darstellung der Koordinaten, bei relativer Darstellung insbesondere in Bezug auf eine vorgegebene absolute Koordinate.

Im folgenden ist ein Beispiel für die Beschreibung der in Figur 2 dargestellten ersten Darstellung der durch den ersten bis vierzehnten Punkt dargestellten digitalen Karte gegeben. Es wird beispielhaft eine Formulierung entsprechend der Beschreibungssprache XML (Extended Markup Language) gewählt.

| **XML** | | | | **Hinweise** |
|---|---|---|---|---|
| | | | | |
| | | | | |
| <NET> | | | | Netz öffnen |
| <ROAD> | | | | Hauptpfad öffnen |
| | <P X="" Y="" > <NAME>1</NAME> </P> | | | Punkt 1 |
| | <P X="" Y="" CREF="P2"> <NAME>2</NAME> | | | Knotenpunkt 2 öffnen |
| | <ROAD> | | | erster Pfad öffnen |
| | | <P X="" Y="" > <NAME>2.1.1</NAME> </P> | | |
| | | <P X="" Y="" > <NAME>2.1.2</NAME> </P> | | |
| | </ROAD> | | | Unterpfad schließen |
| | </P> | | | Knotenpunkt 2 schließen |
| | <P X="" Y="" CREF="P3"> <NAME>3</NAME> | | | Knotenpunkt 3 öffnen |
| | <ROAD> | | | zweiter Pfad öffnen |
| | | <P X="" Y="" > <NAME>3.1.1</NAME> </P> | | |
| | </ROAD> | | | |
| | <ROAD> | | | dritter Pfad öffnen |
| <P X="" Y="" CREF="P3.2.1" > <NAME>3.2.1</NAME> | | | | |
| | | <ROAD> | | fünfter Pfad öffnen |
| | | | <P X="" Y="" > <NAME>3.2.1.1.1</NAME> </P> | |
| | | </ROAD> | | |
| | | </P> | | |
| <P X="" Y="" > <NAME>3.2.2</NAME> </P> | | | | |
| | | <CROSSREF NAME="P5"/> | | Cross Reference zu Knotenpunkt 5 |
| | </ROAD> | | | |
| | <ROAD> | | | vierter Pfad öffnen |
| | | <P X="" Y="" > <NAME>3.3.1</NAME> </P> | | |
| | | <P X="" Y="" > <NAME>3.3.2</NAME> </P> | | |
| | </ROAD> | | | |
| | </P> | | | Knotenpunkt 3 schließen |
| | <P X="" Y="" > <NAME>4</NAME> </P> | | | Punkt 4 |
| | <P X="" Y="" CREF="P5"> <NAME>5</NAME> </P> | | | Knotenpunkt 5 |
| | <P X="" Y="" > <NAME>6</NAME> </P> | | | Punkt 6 |
| </ROAD> | | | | Hauptpfad schließen |
| </NET> | | | | Netz schließen |

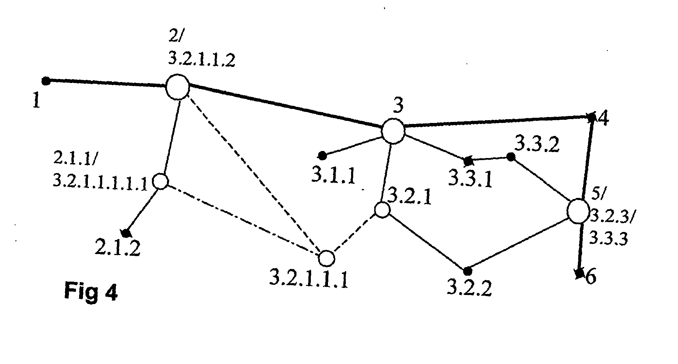

In Figur 4 ist eine Darstellung einer ergänzten digitalen Karte dargestellt. Hierbei ist bei der gemäß der ersten Darstellung der digitalen Karte partitionierten digitalen Karte sowohl der zweite Punkt 2 als auch der siebte Punkt 2.1.1 jeweils zusätzlich mit dem vierzehnten Punkt 3.2.1.1.1 verbunden. Die Verbindung zwischen dem vierzehnten Punkt 3.2.1.1.1 und dem zweiten Punkt 2 stellt eine Verlängerung des fünften Pfades vom zehnten Punkt 3.2.1 über den vierzehnten Punkt 3.2.1.1.1 zum zweiten Punkt dar. Der zweite Punkt 2 kann daher auch als Punkt 3.2.1.1.2 aufgefasst werden, weshalb der zweite Punkt die Bezeichnung 2/3.2.1.1.2 trägt. Im Gegensatz zur ersten Darstellung der digitalen Karte ist der vierzehnte Punkt 3.2.1.1.1 in der ergänzten digitalen Karte als Knotenpunkt ausgebildet, von dem ein dreizehnter Pfad zum siebten Punkt 2.1.1 abzweigt. Der siebte Punkt kann daher auch als Punkt 3.2.1.1.1.1.1 bezeichnet werden und trägt daher in Figur 4 ebenfalls diese Bezeichnung. Weiterhin ist bei der ergänzten digitalen Karte der dreizehnte Punkt 3.3.2 mit dem fünften Punkt 5/3.2.3 verbunden. Der fünfte Punkt ist somit sowohl Teil des Hauptpfades (Punkt 5 des Hauptpfades) als auch des dritten Pfades (Punkt 3.2.3 des dritten Pfades) als auch des vierten Pfades (Punkt 3.3.3 des vierten Pfades). Der fünfte Punkt trägt daher alle diese drei Bezeichnungen. Durch einfaches Einfügen von Referenzinformationen (im Beispiel beim vierzehnten Punkt) oder von Kreuzreferenzen (Cross Reference) (im Beispiel beim zweiten, fünften, siebten und dreizehnten Punkt) auf einen bereits beschriebenen Punkt ist es somit möglich, weitere Verbindungen, die beispielsweise Straßen darstellen, vorzusehen.

## Patentansprüche

1. Verfahren zur Codierung, zur Decodierung und/oder zur Übertragung von Ortsinformationen gemäß eines Datenformats, wobei die Ortsinformationen eine Mehrzahl von Punkten umfassen, **dadurch gekennzeichnet, dass** wenigstens ein Pfad und ein Hauptpfad codiert werden, wobei der Hauptpfad und der wenigstens eine Pfad zusammen die Mehrzahl von Punkten umfassen, wobei der Hauptpfad eine Mehrzahl von Hauptpunkten aus der Mehrzahl von Punkten umfasst, wobei der wenigstens eine Pfad eine Mehrzahl von Pfadpunkten umfasst, wobei der wenigstens eine Pfad bezüglich des Hauptpfads als ein Unterpfad vorgesehen wird, wobei wenigstens ein Pfadpunkt als ein Verzweigungspunkt mit einem Hauptpunkt identisch ist und wobei die Ortsinformationen gemäß des Datenformats in der Reihenfolge der Hauptpunkte angeordnet werden, wobei bei der Codierung der Ortsinformationen für eine vorgegebene Mehrzahl von Punkten die Definition des Hauptpfades und des wenigstens einen Pfades in Abhängigkeit eines Partitionierungsparameters vorgenommen wird.

2. Verfahren Anspruch 1, **dadurch gekennzeichnet, dass** die Ortsinformationen eine Mehrzahl von Pfaden umfassen, dass ein zweiter Pfad in Bezug auf einen ersten Pfad ein Unterpfad ist, wobei wenigstens ein Pfadpunkt des zweiten Pfades als ein Verzweigungspunkt mit einem Pfadpunkt des ersten Pfades identisch ist.

3. Verfahren nach einem der vorhergehenden Ansprüche, **dadurch gekennzeichnet, dass** der mindestens eine Pfadpunkt des zweiten Pfades, der in Bezug auf den ersten Pfad ein Unterpfad ist, der Anfangspunkt des zweiten Pfades ist.

4. Verfahren nach einem der vorhergehenden Ansprüche, **dadurch gekennzeichnet, dass** der Partitionierungsparameter der Streckenwiderstand ist, der einer Streckenverbindung zwischen zwei Punkten aus der Mehrzahl von Punkten zugeordnet ist.

5. Verfahren nach einem der vorhergehenden Ansprüche, **dadurch gekennzeichnet, dass** der Partitionierungsparameter die Strassenbezeichnung und/oder Strassenkategorie einer Streckenverbindung zwischen zwei Punkten aus der Mehrzahl von Punkten zugeordnet ist.

6. Verfahren nach einem der vorhergehenden Ansprüche, **dadurch gekennzeichnet, dass** offene Pfade vorgesehen sind.

7. Verfahren nach einem der vorhergehenden Ansprüche, **dadurch gekennzeichnet, dass** die Pfade geschlossene Maschen bilden.

8. Verfahren nach einem der vorhergehenden Ansprüche, **dadurch gekennzeichnet, dass** zusätzlich zu der Mehrzahl von Punkten neue Punkte und/oder neue Streckenverbindungen in die Ortsinformationen integriert werden, wobei die Beschreibung der Mehrzahl von Punkten erhalten bleibt.

9. Verfahren nach einem der vorhergehenden Ansprüche, **dadurch gekennzeichnet, dass** das Datenformat vorsieht, einem Punkt aus der Mehrzahl von Punkten oder mehreren Punkten aus der Mehrzahl von Punkten ein Attribut zuzuordnen.

10. Verfahren nach einem der vorhergehenden Ansprüche, **dadurch gekennzeichnet, dass** das Datenformat die Darstellung der Ortinformationen gemäss einer Beschreibungssprache (markup-language), insbesondere XML-basiert (Extended markup language), vorsieht.

## Claims

1. Method for encoding, decoding and/or transmitting location information based on a data format, wherein the location information comprises a plurality of points, **characterized in that** at least one path and a main path are encoded, wherein the main path and the at least one path together comprise the plurality of points, wherein the main path comprises a plurality of main points from the plurality of points, wherein the at least one path comprises a plurality of path points, wherein the at least one path is provided as a subpath for the main path, wherein at least one path point as a branch point is identical to a main point, and wherein the location information based on the data format is arranged in the order of the main points, wherein the encoding of the location information involves the main path and the at least one path being defined for a prescribed plurality of points on the basis of a partitioning parameter.

2. Method according to Claim 1, **characterized in that** the location information comprises a plurality of paths, **in that** a second path is a subpath for a first path, wherein at least one path point on the second path as a branch point is identical to a path point on the first path.

3. Method according to one of the preceding claims, **characterized in that** the at least one path point on the second path, which is a subpath for the first path, is the starting point for the second path.

4. Method according to one of the preceding claims, **characterized in that** the partitioning parameter is the section resistance which is associated with a point-to-point connection between two points from the plurality of points.

5. Method according to one of the preceding claims, **characterized in that** the partitioning parameter is associated with the road name and/or road category of a point-to-point connection between two points from the plurality of points.

6. Method according to one of the preceding claims, **characterized in that** open paths are provided.

7. Method according to one of the preceding claims, **characterized in that** the paths form closed meshes.

8. Method according to one of the preceding claims, **characterized in that,** in addition to the plurality of points, new points and/or new point-to-point connections are integrated into the location information, the description of the plurality of points being retained.

9. Method according to one of the preceding claims, **characterized in that** the data format provides for an attribute to be associated with one point from the plurality of points or with a plurality of points from the plurality of points.

10. Method according to one of the preceding claims, **characterized in that** the data format provides for the location information to be presented on the basis of a description language (markup language), particularly XML-based (Extended Markup Language).

## Revendications

1. Procédé de codage, de décodage et/ou de transfert d'informations de localisation dans un format de données, les informations de localisation comprenant différents points,
**caractérisé en ce que**
au moins un parcours et un parcours principal sont codés,
le parcours principal et le ou les parcours comprennent tous les différents points,
le parcours principal comprend plusieurs points principaux parmi les différents points,
le ou les parcours comprennent plusieurs points de parcours,
le ou les parcours sont prévus comme sous-parcours du parcours principal,
au moins un point de parcours constituant un point de ramification est identique à un point principal et
dans le format de données, les informations de localisation sont disposées dans la succession des points principaux et lors du codage des informations de localisation, la définition du parcours principal et du ou des parcours est réalisée en fonction d'un paramètre de répartition pour un nombre prédéterminé de points.

2. Procédé selon la revendication 1, **caractérisé en ce que** les informations de localisation comprennent plusieurs parcours, **en ce qu'**un deuxième parcours est un sous-parcours d'un premier parcours et **en ce qu'**au moins un point constituant un point de ramification du deuxième parcours est identique à un point du premier parcours.

3. Procédé selon l'une des revendications précédentes, **caractérisé en ce que** le ou les points du deuxième parcours qui est un sous-parcours d'un premier parcours sont le point initial du deuxième parcours.

4. Procédé selon l'une des revendications précédentes, **caractérisé en ce que** le paramètre de répartition est la résistance d'un tronçon associée à un tronçon de liaison qui relie deux des différents points.

5. Procédé selon l'une des revendications précédentes, **caractérisé en ce que** le paramètre de répartition associe la désignation de la chaussée et/ou la catégorie de chaussée à un tronçon qui relie deux des différents points.

6. Procédé selon l'une des revendications précédentes, **caractérisé en ce qu'**il prévoit des parcours ouverts.

7. Procédé selon l'une des revendications précédentes, **caractérisé en ce que** les parcours forment des mailles fermées.

8. Procédé selon l'une des revendications précédentes, **caractérisé en ce qu'**en plus des différents points, le nouveau point et/ou le nouveau tronçon de liaison sont intégrés dans les informations de localisation en conservant la description des différents points.

9. Procédé selon l'une des revendications précédentes, **caractérisé en ce que** le format de données prévoit d'associer un attribut à un des différents points ou à plusieurs de ces différents points.

10. Procédé selon l'une des revendications précédentes, **caractérisé en ce que** le format de données prévoit la présentation des informations de localisation dans un langage descriptif ("markup-language"), en particulier à base XML ("Extended markup language" - langage descriptif étendu).
